# EUROPÄISCHE PATENTANMELDUNG

(11) **EP 4 129 131 A1**
(43) Veröffentlichungstag der Anmeldung: **08.02.2023**
(21) Anmeldenummer: 21189564.4
(22) Anmeldetag: 04.08.2021
(51) Int. Cl.: A47J 43/07, A47J 36/38

(54) **ABZUGSEINHEIT FÜR EINE KÜCHENMASCHINE**

(71) Anmelder: BSH Hausgeräte GmbH, 81739 München (DE)
(72) Erfinder: Daburger, Josef, 83313 Siegsdorf (DE); Haitzer, Simon, 83355 Grabenstätt (DE); Helminger, Markus, 83346 Bergen (DE); Horst, Gerald, 76131 Karlsruhe (DE); Kick, Bernhard, 83301 Traunreut (DE); Kleinlein, Philipp, 81371 München (DE); Nerbl, Christian, 83512 Wasserburg am Inn (DE); Schaufler, Stephan, 83334 Inzell (DE); Singhartinger, Christian, 83229 Aschau (DE); Koscak, Ales, 6230 Postojna (SI); Orbanic, Henri, 1000 Ljubljana (SI); Uplaznik, Marko, 3312 Prebold (SI)

(57) **Zusammenfassung**

Es wird eine Abzugseinheit (200) für eine Küchenmaschine (100) beschrieben, die einen Behälter (104) zur Verarbeitung eines Nahrungsmittels umfasst. Die Abzugseinheit (200) ist ausgebildet, an der Küchenmaschine (100) angeordnet zu werden. Des Weiteren umfasst die Abzugseinheit (200) eine Einlassöffnung (201) und ist ausgebildet, einen Ansaugluftstrom zu bewirken, durch den Dämpfe (221) aus dem Behälter (104) durch die Einlassöffnung (201) in die Abzugseinheit (200) gefördert werden.

## Beschreibung

Die Erfindung betrifft eine Küchenmaschine mit einer Kochfunktion. Insbesondere betrifft die Erfindung die Reduzierung und/oder die Aufnahme von Dämpfen (auch als Wrasen bezeichnet) im Umfeld einer Küchenmaschine.

Eine Küchenmaschine kann ein oder mehrere (ggf. austauschbare) Einsätze und/oder Werkzeuge aufweisen, mit denen ein Nahrungsmittel in einem Behälter der Küchenmaschine verarbeitet werden kann. Ferner kann die Küchenmaschine eine Garfunktion aufweisen, um das Nahrungsmittel in dem Behälter zu garen (z.B. zu kochen und/oder zu braten). Beim Betrieb der Garfunktion entstehen häufig fettige und/oder riechende Dämpfe, die von einem Nutzer der Küchenmaschine als unangenehm empfunden werden können.

Das vorliegende Dokument befasst sich mit der technischen Aufgabe, in effizienter und zuverlässiger Weise zu bewirken, dass aus dem Behälter einer Küchenmaschine austretende Dämpfe nicht das direkte Umfeld der Küchenmaschine belasten.

Die Aufgabe wird jeweils durch die Gegenstände der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Abzugseinheit für eine Küchenmaschine beschrieben, wobei die Küchenmaschine einen Behälter zur Verarbeitung, insbesondere zum Garen, eines Nahrungsmittels umfasst. Die Küchenmaschine kann z.B. eine Temperierungseinheit aufweisen, die eingerichtet ist, ein Nahrungsmittel in dem Behälter zu erhitzen, um das Nahrungsmittel zu garen, z.B. zu kochen oder zu braten. Die Temperierungseinheit kann ggf. mehrere Stufen zur Temperierung eines Nahrungsmittels aufweisen.

Die Abzugseinheit ist ausgebildet, an der Küchenmaschine, insbesondere an (der Rückseite) der Basis der Küchenmaschine (auf der der Behälter der Küchenmaschine steht), angeordnet zu werden. Dabei kann die Abzugseinheit (lösbar oder fest) mit der Küchenmaschine verbunden sein.

Die Abzugseinheit kann eine Einlassöffnung umfassen (z.B. in Form eines Gitters). Des Weiteren kann die Abzugseinheit ausgebildet sein, einen Ansaugluftstrom zu bewirken, durch den Dämpfe aus dem Behälter durch die Einlassöffnung in die Abzugseinheit gefördert werden. Zu diesem Zweck kann die Abzugseinheit ein Gebläse umfassen. Die Dämpfe können dann (z.B. in der Abzugseinheit) gefiltert werden (z.B. um Gerüche und/oder Fett zu reduzieren). Des Weiteren können die gefilterten Dämpfe über eine Auslassöffnung (der Abzugseinheit) wieder in die Umgebung abgegeben werden.

Es wird somit eine Abzugseinheit beschrieben, die ausgebildet ist, direkt an dem Behälter einer Küchenmaschine Dämpfe abzusaugen. Die Abzugseinheit kann dabei zusammen mit der Küchenmaschine eine Einheit bilden, sodass die Abzugseinheit in komfortabler Weise zusammen mit der Küchenmaschine platziert und/oder umplatziert werden kann (z.B. auf der Arbeitsplatte einer Küche). So können die Geruchs- und/oder Fettbelastung in der direkten Umgebung einer Küchenmaschine in effizienter und zuverlässiger Weise reduziert werden.

Die Abzugseinheit kann ausgebildet sein, über eine mechanische Schnittstelle (lösbar) mit der Küchenmaschine (insbesondere mit der Basis der Küchenmaschine) verbunden und/oder von der Küchenmaschine getrennt zu werden. Beispielsweise kann die Abzugseinheit als abnehmbarer Aufsatz der Küchenmaschine ausgebildet sein (etwa als Zubehörteil der Küchenmaschine). So kann der Funktionsumfang der Küchenmaschine in effizienter und flexibler Weise (bei Bedarf) erweitert werden.

Die Abzugseinheit kann einen Deckel umfassen, der ausgebildet ist, den Behälter der Küchenmaschine zu bedecken. Die Einlassöffnung kann dabei an dem Deckel angeordnet sein, insbesondere derart, dass die Einlassöffnung (direkt) über dem Behälter angeordnet ist, wenn der Deckel den Behälter bedeckt.

Der Deckel kann ausgebildet sein, um ein Gelenk geschwenkt zu werden, um den Deckel und damit den Behälter zu öffnen oder um den Behälter mit dem Deckel zu bedecken. Alternativ kann der Deckel ausgebildet sein, in die Rückwand (an der Rückseite der Basis) der Küchenmaschine (zumindest teilweise) versenkt zu werden, um den Behälter zu öffnen, und aus der Rückwand der Küchenmaschine herausbewegt zu werden, um den Behälter mit dem Deckel zu bedecken.

Durch die Integration der Abzugseinheit in den Deckel des Behälters der Küchenmaschine können die Dämpfe aus dem Behälter in besonders effizienter und zuverlässiger Weise abgesaugt werden.

Die Abzugseinheit kann als separate Einheit zu der Küchenmaschine mit einer separaten Energieversorgung (z.B. mit einem separaten Netzstecker) und/oder mit einer separaten Benutzerschnittstelle (z.B. mit einem Bedienelement zum Einstellen der Stufe des Gebläses der Abzugseinheit) ausgebildet sein. So kann eine besonders flexible Erweiterung des Funktionsumfangs der Küchenmaschine ermöglicht werden.

Die Abzugseinheit kann eine Daten-Schnittstelle umfassen, die ausgebildet ist, eine Datenkommunikation mit der Küchenmaschine zu ermöglichen (z.B. um Sensordaten von der Abzugseinheit an die Steuereinheit der Küchenmaschine zu senden, und/oder um das Gebläse der Abzugseinheit ausgehend von der Steuereinheit der Küchenmaschine zu steuern).

Alternativ oder ergänzend kann die Abzugseinheit eine Energie-Schnittstelle umfassen, die ausgebildet ist, die Abzugseinheit mit elektrischer Energie und/oder elektrischer Leistung aus der und/oder über die Küchenmaschine zu versorgen.

Durch die Bereitstellung einer Daten-Schnittstelle und/oder einer Energie-Schnittstelle kann eine besonders effiziente Abzugseinheit bereitgestellt werden.

Die Abzugseinheit kann zumindest einen Sensor umfassen, der eingerichtet ist, Sensordaten in Bezug auf die Dämpfe aus dem Behälter, insbesondere in Bezug auf die chemische Zusammensetzung und/oder in Bezug auf die Menge der Dämpfe aus dem Behälter, zu erfassen. Des Weiteren kann die Abzugseinheit eingerichtet sein, der Küchenmaschine, insbesondere über die Daten-Schnittstelle, die Sensordaten bereitzustellen. Die Abzugseinheit kann somit dazu genutzt werden, den Kochprozess in der Küchenmaschine zu überwachen. So kann die Güte der hergestellten Nahrungsmittel in effizienter und zuverlässiger Weise erhöht werden.

Die Abzugseinheit kann ein Koppelelement (insbesondere eine mechanische Kupplung) umfassen, das ausgebildet ist, die Abzugseinheit über eine Fluidleitung (insbesondere über einen Schlauch) mit einem externen Gebläse (außerhalb der Abzugseinheit und/oder der Küchenmaschine), insbesondere mit dem Gebläse eines (externen) Dunstabzuges (z.B. einer Dunstabzugshaube und/oder eines Kochfelds mit integriertem Dunstabzug (einem sogenannten "venting cooktop")), zu koppeln, um zu ermöglichen, dass der Ansaugluftstrom durch das externe Gebläse erzeugt wird. So kann der Abzug der Dämpfe aus dem Behälter der Küchenmaschine in besonders effizienter Weise ermöglicht werden.

Die Abzugseinheit kann ausgebildet sein, durch die Steuereinheit der Küchenmaschine gesteuert zu werden. Alternativ oder ergänzend kann die Abzugseinheit ausgebildet sein, von einem Nutzer über eine Benutzerschnittstelle der Küchenmaschine bedient zu werden. So kann ein besonders effizienter und komfortabler Betrieb der Abzugseinheit ermöglicht werden.

Gemäß einem weiteren Aspekt wird ein System beschrieben, das die in diesem Dokument beschriebene Abzugseinheit umfasst. Die Abzugseinheit ist eingerichtet, einen Ansaugluftstrom zu bewirken, durch den Dämpfe aus einem Behälter einer Küchenmaschine in die Abzugseinheit gefördert werden. Die Abzugseinheit kann dabei an der Rückseite der Basis der Küchenmaschine angeordnet, insbesondere befestigt, sein.

Das System umfasst ferner einen, von der Abzugseinheit örtlich getrennten und insbesondere fest (z.B. in einer Küche) installierten bzw. installierbaren, Dunstabzug mit einem Gebläse. Der Dunstabzug kann insbesondere ein Dunstabzug für eine Küche (z.B. eine Dunstabzugshaube oder ein Kochfeld mit integriertem Dunstabzug) sein.

Außerdem umfasst das System eine Fluidleitung (insbesondere einen Schlauch), die ausgebildet ist, über ein erstes Koppelelement mit dem Dunstabzug und über ein zweites Koppelelement mit der Abzugseinheit, insbesondere lösbar, verbunden zu werden, sodass der Ansaugluftstrom durch das Gebläse des Dunstabzugs bewirkt werden kann. So kann in besonders effizienter Weise ein Dunstabzug für eine Küchenmaschine bereitgestellt werden.

Gemäß einem weiteren Aspekt wird eine Küchenmaschine mit der in diesem Dokument beschriebenen Ansaugeinheit beschrieben.

Gemäß einem weiteren Aspekt wird eine Steuereinheit für eine Küchenmaschine und/oder für eine Ansaugeinheit beschrieben. Die Küchenmaschine ist ausgebildet, mit der Abzugseinheit zum Ansaugen von Dämpfen aus einem Behälter der Küchenmaschine betrieben zu werden. Zu diesem Zweck kann die Ansaugeinheit an einer Rückwand der Basis der Küchenmaschine angeordnet, insbesondere befestigt, sein.

Die Steuereinheit ist eingerichtet, Zustandsdaten in Bezug auf einen Betriebszustand (z.B. die Heizstufe der Temperierungseinheit) der Küchenmaschine und/oder in Bezug auf einen Zustand (z.B. der Temperatur) eines Nahrungsmittels in dem Behälter zu ermitteln. Des Weiteren ist die Steuereinheit eingerichtet, die Abzugseinheit, insbesondere das Gebläse der Abzugseinheit, in Abhängigkeit von den Zustandsdaten zu betreiben. So kann ein besonders energieeffizienter und komfortabler Betrieb der Abzugseinheit bewirkt werden.

Gemäß einem weiteren Aspekt wird eine weitere Steuereinheit für eine Küchenmaschine und/oder für eine Ansaugeinheit beschrieben. Die Küchenmaschine ist ausgebildet, mit der Abzugseinheit zum Ansaugen von Dämpfen aus einem Behälter der Küchenmaschine betrieben zu werden. Zu diesem Zweck kann die Ansaugeinheit an einer Rückwand der Basis der Küchenmaschine angeordnet, insbesondere befestigt, sein.

Die Steuereinheit ist eingerichtet, Sensordaten in Bezug auf die aus dem Behälter von der Abzugseinheit angesaugten Dämpfe, insbesondere in Bezug auf die chemische Zusammensetzung und/oder in Bezug auf die Menge der Dämpfe aus dem Behälter, zu ermitteln. Die Sensordaten können von einem Sensor der Abzugseinheit erfasst worden sein. Die Steuereinheit ist ferner eingerichtet, die Küchenmaschine (insbesondere die Temperierungseinheit der Küchenmaschine) in Abhängigkeit von den Sensordaten zu betreiben. So kann die Güte eines in der Küchenmaschine hergestellten Nahrungsmittels in zuverlässiger Weise erhöht werden.

Gemäß einem weiteren Aspekt wird ein Verfahren zum Betreiben einer Abzugseinheit beschrieben, wobei die Abzugseinheit zum Ansaugen von Dämpfen aus einem Behälter einer Küchenmaschine ausgebildet ist. Das Verfahren umfasst das Ermitteln von Zustandsdaten in Bezug auf einen Betriebszustand der Küchenmaschine und/oder in Bezug auf einen Zustand eines Nahrungsmittels in dem Behälter. Außerdem umfasst das Verfahren das Betreiben der Abzugseinheit, insbesondere eines Gebläses der Abzugseinheit, in Abhängigkeit von den Zustandsdaten.

Gemäß einem weiteren Aspekt wird ein weiteres Verfahren zum Betreiben einer Küchenmaschine in Zusammenhang mit einer Abzugseinheit beschrieben, wobei die Abzugseinheit zum Ansaugen von Dämpfen aus einem Behälter der Küchenmaschine ausgebildet ist. Das Verfahren umfasst das Ermitteln von Sensordaten in Bezug auf die aus dem Behälter von der Abzugseinheit angesaugten Dämpfe, insbesondere in Bezug auf eine chemische Zusammensetzung und/oder in Bezug auf eine Menge der Dämpfe aus dem Behälter. Des Weiteren umfasst das Verfahren das Betreiben der Küchenmaschine in Abhängigkeit von den Sensordaten.

Es ist zu beachten, dass jegliche Aspekte der in diesem Dokument beschriebenen Ansaugeinheit, der beschriebenen Küchenmaschine, des beschriebenen Systems, der beschriebenen Steuereinheiten und/oder der beschriebenen Verfahren in vielfältiger Weise miteinander kombiniert werden können. Insbesondere können die Merkmale der

Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figuren 1a und 1b: eine beispielhafte Küchenmaschine;
- Figuren 2a und 2b: beispielhafte Küchenmaschinen mit jeweils einer Abzugseinheit für Dämpfe aus dem Behälter der Küchenmaschine;
- Figur 3a: eine beispielhafte Abzugseinheit als autarken Aufsatz für eine Küchenmaschine;
- Figur 3b: eine beispielhafte Abzugseinheit als integrierten Aufsatz für eine Küchenmaschine;
- Figur 4: eine beispielhafte Abzugseinheit mit einer Anbindung zu einer Dunstabzugshaube;
- Figur 5a: ein Ablaufdiagramm eines beispielhaften Verfahrens zum Betrieb einer Abzugseinheit; und
- Figur 5b: ein Ablaufdiagramm eines beispielhaften Verfahrens zum Betrieb einer Küchenmaschine.

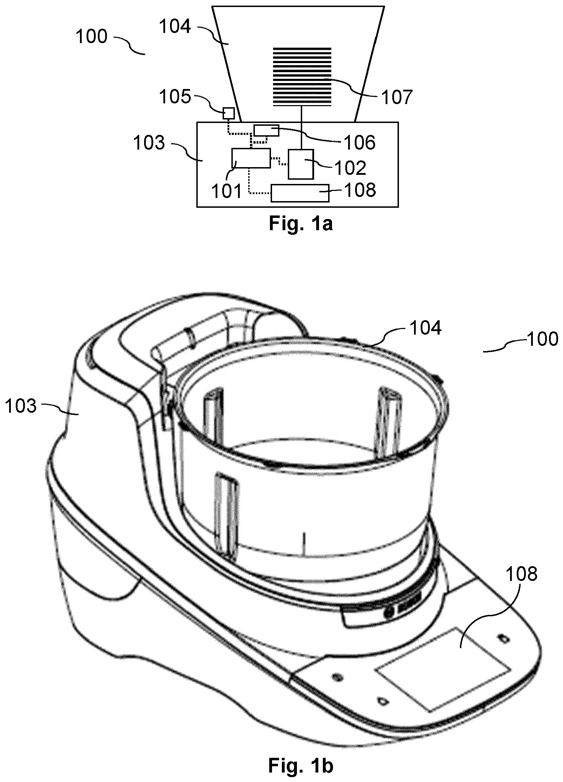

Wie eingangs dargelegt, befasst sich das vorliegende Dokument damit, die Belastung des direkten Umfelds einer Küchenmaschine aufgrund von austretenden Dämpfen in effizienter und zuverlässiger Weise zu reduzieren. In diesem Zusammenhang zeigen Figuren 1a und 1b eine beispielhafte Küchenmaschine 100. Die in den Figuren 1a und 1b dargestellte Küchenmaschine 100 umfasst einen Behälter 104, der auf einer Basis 103 der Küchenmaschine 100 angeordnet sein kann und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen) an dem Motor 102 montiert werden. Die Küchenmaschine 100 kann eingerichtet sein, den Behälter 104 mittels einer Temperierungseinheit 105 zu temperieren, z.B. zu kühlen oder zu erwärmen (insbesondere um das Nahrungsmittel in dem Behälter 104 zu garen, insbesondere zu kochen oder zu braten).

Des Weiteren kann die Küchenmaschine 100 ein oder mehrere Sensoren 106 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor 106 ist ein Temperatursensor, der eingerichtet ist, Temperaturdaten in Bezug auf die Temperatur des Behälters 104 und/oder des darin enthaltenen Nahrungsmittels zu erfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben zur Steuerung der Küchenmaschine 100 zu tätigen (z.B. über ein oder mehrere Bedienelemente), und/oder die es der Küchenmaschine 100 ermöglicht, Rückmeldungen an einen Nutzer der Küchenmaschine 100 auszugeben (z.B. über einen Bildschirm). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer externen Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen. Insbesondere kann die Steuereinheit 101 eingerichtet sein, das Gebläse der in diesem Dokument beschriebenen Abzugseinheit in Abhängigkeit von den Rezeptdaten zu betreiben, insbesondere um den Komfort für den Nutzer der Küchenmaschine 100 zu erhöhen.

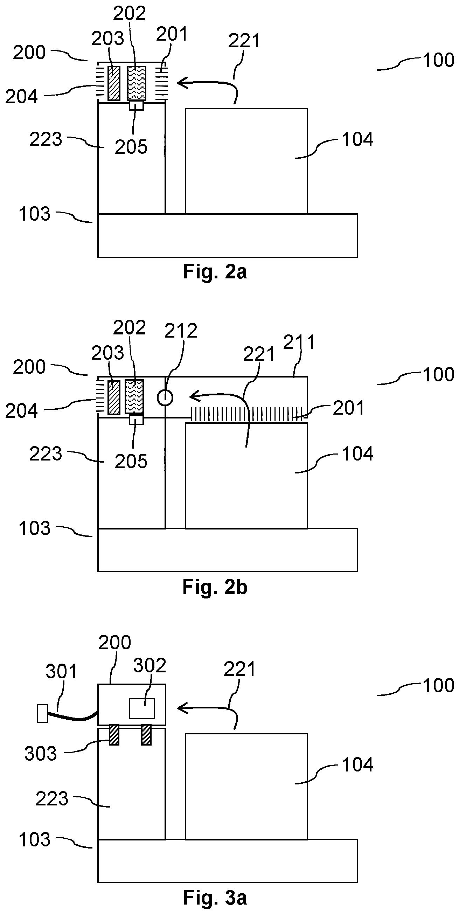

Wie bereits eingangs dargelegt, können beim Garen eines Nahrungsmittels in dem Behälter 104 (fettige und/oder riechende) Dämpfe entstehen. Die Küchenmaschine 100 kann, wie beispielhaft in den Figuren 2a uns 2b dargestellt, eine Abzugseinheit 200 umfassen, die ausgebildet ist, aus dem Behälter 104 der Küchenmaschine 100 austretende Dämpfe 221 anzusaugen. Die Abzugseinheit 200 kann z.B. an der von dem Nutzer abgewandten Rückseite 223 der Basis 103 der Küchenmaschine 100 angeordnet sein. Durch die Bereitstellung einer Abzugseinheit 200 in unmittelbarer Nähe zu dem Behälter 104 kann in zuverlässiger und effizienter Weise vermieden werden, dass das direkte Umfeld der Küchenmaschine 100 durch die austretenden Dämpfe 211 belastet wird.

Die Abzugseinheit 200 kann eine dem Behälter 104 zugewandte Eingangs- bzw. Einlassöffnung 201 (z.B. ein Eingangsgitter) aufweisen. Des Weiteren kann die Abzugseinheit 200 (flussabwärts zu der Eingangsöffnung) ein Filtermodul 202 umfassen, das ausgebildet ist, die angesaugten Dämpfe 221 zu filtern. Das Filtermodul 202 kann ein oder mehrere unterschiedliche Filter aufweisen, z.B. einen Fettfilter, einen Geruchsfilter, etc. Ferner kann die Abzugseinheit 200 (flussabwärts zu dem Filtermodul 202) ein Gebläse 203 umfassen, das ausgebildet ist, einen Ansaugluftstrom zu bewirken, durch den die Dämpfe 221 aus dem Behälter 104 angesaugt werden. Die gefilterten Dämpfe 202 können dann über eine Ausgangs- bzw. Auslassöffnung 204, die z.B. an der Rückseite der Basis 103 angeordnet ist, aus der Abzugseinheit 200 geleitet werden (wobei die Ausgangsöffnung 204 flussabwärts von dem Gebläse 203 angeordnet ist).

Die Abzugseinheit 200 kann ferner ein oder mehrere Sensoren 205 umfassen. Die ein oder mehreren Sensoren 205 können ausgebildet sein,
- Sensordaten in Bezug auf den Volumenstrom durch die Abzugseinheit 200 zu ermitteln; und/oder
- Sensordaten in Bezug auf die chemische Zusammensetzung der angesaugten Dämpfe 221 (z.B. einen Anteil an Fett und/oder Wasser) zu ermitteln; und/oder
- Sensordaten in Bezug auf einen Zustand (insbesondere einen Verschmutzungszustand) des Filtermoduls 202 zu ermitteln.

Die Abzugseinheit 200 kann, wie beispielhaft in Fig. 2a dargestellt, als (lösbarer) Aufsatz auf die Rückseite 223 der Basis 103 ausgebildet sein, der seitlich neben dem Behälter 104 angeordnet ist, und somit die aus dem Behälter 104 austretenden Dämpfe 221 von einer Seite des Behälters 104 her absaugt. So kann in besonders effizienter Weise eine Abzugseinheit 200 für eine bereits bestehende Küchenmaschine 100 bereitgestellt werden (ohne das Design der Küchenmaschine 100 wesentlich ändern zu müssen).

Alternativ kann die Abzugseinheit 200, wie beispielhaft in Fig. 2b dargestellt, als Deckel 211 des Behälters 104 ausgebildet sein. In diesem Fall kann die Eingangsöffnung 201 für die Dämpfe 221 direkt in dem Deckel 211 über dem Behälter 104 angeordnet sein. Das Gebläse 203 und/oder die Ausgangsöffnung 204 können weiterhin in einem Aufsatz an der Rückseite 223 der Basis 103 der Küchenmaschine 100 angeordnet sein. Der Deckel 211 zur Abdeckung des Behälters 104 ist bevorzugt über ein Gelenk 212 schwenkbar an der Rückseite 223 der Küchenmaschine 100 befestigt, um den Deckel 211 für einen komfortablen Zugang zu dem Behälter 104 aufklappen zu können.

Die Abzugseinheit 200 kann, wie beispielhaft in Fig. 3a dargestellt, als autarker (lösbarer) Aufsatz ausgebildet sein. Dabei kann die Abzugseinheit 200 eine mechanische Schnittstelle 303 zur Befestigung an der Küchenmaschine 100, insbesondere zur Befestigung an der (Rückseite 223 der) Basis 103 der Küchenmaschine 100, aufweisen. Die mechanischen Schnittstelle 303 kann z.B. eine Steckverbindung, eine Rastverbindung, eine Verbindung über einen Einschub, eine Schraubverbindung, etc. umfassen.

Des Weiteren kann die Abzugseinheit 200 eine eigene Energieversorgung, z.B. mit einem Netzkabel 301 zum Anschluss an ein Versorgungsnetz, aufweisen. Außerdem kann die Abzugseinheit 200 eine dedizierte Benutzerschnittstelle 302 (z.B. mit ein oder mehreren Bedienelementen) aufweisen, die es einem Nutzer z.B. ermöglicht, eine Stufe des Gebläses 203 und/oder den Wert des Volumenstroms durch die Abzugseinheit 200 einzustellen. Durch die Bereitstellung einer autarken Abzugseinheit 200 kann eine Dunstabzugsfunktion für eine bereits bestehende Küchenmaschine 100 in besonders effizienter Weise bereitgestellt werden.

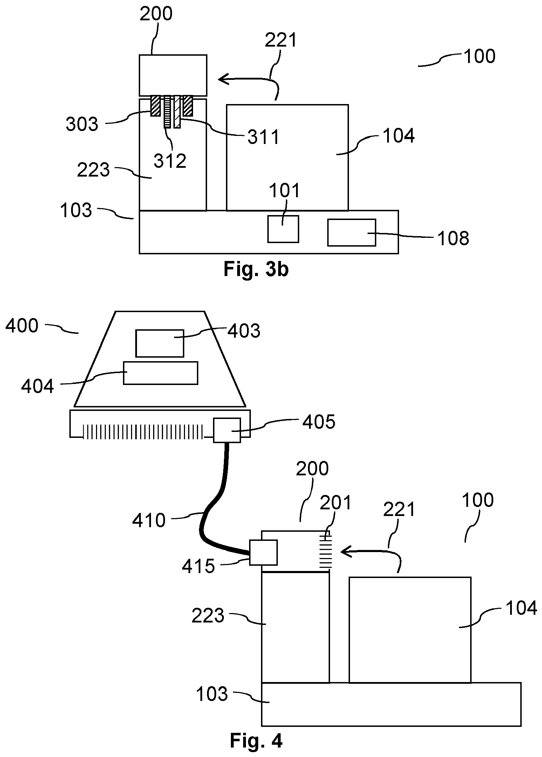

Fig. 3b zeigt eine beispielhafte Abzugseinheit 200, die eine Integration in die Küchenmaschine 100 ermöglicht. Zu diesem Zweck kann die Abzugseinheit 200 eine Energie-Schnittstelle 311 (etwa für eine Steckverbindung) zu der Küchenmaschine 100 umfassen (z.B. in Form von ein oder mehreren elektrischen Kontaktelementen). Die Energieversorgung der Abzugseinheit 200, insbesondere des Gebläses 203 und/oder der ein oder mehreren Sensoren 205, kann dann in besonders effizienter Weise aus der Küchenmaschine 100 heraus erfolgen.

Des Weiteren kann die Abzugseinheit 200 eine Daten-Schnittstelle 312 (etwa für eine Steckverbindung) zu der Küchenmaschine 100 umfassen, die eine Datenkommunikation zwischen der Abzugseinheit 200 und der Küchenmaschine 100 ermöglicht, z.B.
- um die Abzugseinheit 200 (etwa die Gebläsestufe) über die Benutzerschnittstelle 108 der Küchenmaschine 100 steuern zu können; und/oder
- um der Steuereinheit 101 der Küchenmaschine 100 die Sensordaten der ein oder mehreren Sensoren 205 der Abzugseinheit 200 bereitzustellen.

Wie in Fig. 4 dargestellt, kann die Abzugseinheit 200 ausgebildet sein, ein oder mehrere Komponenten, insbesondere das Gebläse 403 und/oder das Filtermodul 404, einer anderen Dunstabzugsvorrichtung 400 (z.B. einer Dunstabzugshaube in einer Küche) zu nutzen. Zu diesem Zweck kann die Abzugseinheit 200 ausgebildet sein, über einen Schlauch 410 mit der Dunstabzugsvorrichtung 400 gekoppelt zu werden, sodass ein von der Dunstabzugsvorrichtung 400 bewirkter Ansaugluftstrom über den Schlauch 410 zu der Einlassöffnung 101 der Abzugseinheit 200 geführt wird, um die Dämpfe 221 aus dem Behälter 104 der Küchenmaschine 100 anzusaugen. Wie in Fig. 4 dargestellt, kann die Abzugseinheit 200 ein Koppelelement 415 umfassen (an der von der Einlassöffnung 201 abgewandten Seite), an dem der Schlauch 410 befestigt werden kann. In entsprechender Weise kann die Dunstabzugsvorrichtung 400 ein Koppelelement 405 aufweisen, an dem der Schlauch 410 befestigt werden kann.

Es wird somit ein Dunstabzug 200 beschrieben, dessen ein oder mehreren Schnittstellen (zur Arretierung 300, zur Stromversorgung 311 und/oder zur Steuerung 312) an ein oder mehrere entsprechende Schnittstellen einer Küchenmaschine 100 angepasst sind. Der Dunstabzug 200 (d.h. die Abzugseinheit) kann somit bei Bedarf an die Küchenmaschine 100 angedockt und/oder angeschlossen werden. Über eine Datenverbindung zwischen dem Dunstabzug 200 und der Küchenmaschine 100 kann Information zum aktuellen Zustand der Küchenmaschine 100 bereitgestellt werden. Es kann dann eine an den jeweiligen Zustand angepasste Luftreinigung (der aus dem Behälter 104 austretenden Dämpfe 221) erfolgen.

Ggf. kann der Dunstabzug 200 (nicht werkzeuglos lösbar) in die Küchenmaschine 100 integriert sein.

Wie in Fig. 2b dargestellt, kann der Dunstabzug 200 als Dunstabzugshaube bzw. Abzugsschirm 211 ausgebildet sein, wobei die Haube bzw. der Schirm 211 über ein Gelenk 212 aufgeklappt werden kann, um während eines Garprozesses einen komfortablen Zugang zu dem Behälter 104 zu ermöglichen (z.B. um eine zusätzliche Zutat in den Behälter 104 geben zu können). So kann eine Trennung des Dunstabzugs 200 von der Küchenmaschine 100 vermieden werden.

Das Filtermodul 202 des Dunstabzugs 200 kann ein elektrostatisches Filter und/oder eine durchströmte Plasmaquelle umfassen. Alternativ oder ergänzend kann das Filtermodul 202 ein Grobfilter, ein Feinfilter und/oder ein Geruchsfilter, beispielsweise ein oder mehrere Lagen eines Streckmetallfilters, eines Baffle-Filters und/oder eines Aktivkohlefilters umfassen.

Durch die Bereitstellung einer Abzugseinheit 200 für eine Küchenmaschine 100 kann die Geruchsbildung im Umfeld der Küchenmaschine 100 während eines Garprozesses in zuverlässiger Weise vermieden werden. Dabei kann je nach Zustand des Garprozesses automatisch eine bedarfsgerechte Steuerung der Lüftung der Abzugseinheit 200 erfolgen. Ferner kann eine Abzugseinheit 200 in bauraum- und kosteneffizienter Weise bereitgestellt werden.

Es wird somit eine integrierte oder nachrüstbare Dunstabzugshaube (d.h. eine Abzugseinheit) 200 für eine Küchenmaschine 100 beschrieben. Dabei können in der integrierten Variante der Abzugseinheit 200 alle Komponenten der Abzugseinheit 200 in der Rückseite 223 der Küchenmaschine 100 integriert sein. Dabei kann der Einlass 201 der Abzugseinheit 200 als Deckel für das Filtermodul 202 dienen, wobei das Filtermodul 202 als Filterkartusche ausgebildet sein kann. Der Einlass 201 kann dabei geöffnet und geschlossen werden, z.B. um das Filtermodul 202 reinigen und/oder austauschen zu können.

Die nachrüstbare Variante der Abzugseinheit 200 kann entsprechend ausgebildet sein, (jedoch derart,) dass die Abzugseinheit 200 (ggf. komplett) von der Küchenmaschine 100 entfernt werden kann (z. B. wie der Wassertank bei einem Kaffeevollautomaten).

Beide Varianten der Abzugseinheit 200 können aufweisen,
- einen Einlass 201 als Trichtergeometrie, welche an der Filterkartusche 202 andockt und abschließt;
- eine Filterkartusche 202 mit Mehrkammersystem und verschiedenen Filterelementen;
- ein an die Kartusche 202 anschließendes Lüfterelement 203 (z.B. einen Querstromlüfter); durch das Lüfterelement 203 wird ein Unterdruck für die nötige Saugleistung der Abzugseinheit 200 erzeugt; und/oder
- einen Auslass 204 auf der Rückseite der Küchenmaschine 100.

Die Abzugseinheit 200 kann einen (z.B. im Geschirrspüler, reinigbaren) Fettabscheider aufweisen (z.B. als Teil des Filtermoduls 202). Alternativ oder ergänzend kann die Abzugseinheit 200 (z.B. als Teil des Filtermoduls 202) ein (austauschbares) Aktivkohlefilter aufweisen. Der Fettabscheider und das Geruchsfilter können jeweils einzeln oder als kombinierte Kartusche bereitgestellt werden.

Wie bereits oben dargelegt, kann ein beidseitiger Informationsaustausch zwischen der Abzugseinheit 200 und der Küchenmaschine 100, insbesondere der Steuereinheit 101 der Küchenmaschine 100, erfolgen. Dabei kann der Arbeitspunkt des Luftabzugs der Abzugseinheit 200 in Abhängigkeit von dem Betriebszustand der Temperierungseinheit 106 und/oder in Abhängigkeit von den Sensordaten der ein oder mehreren Sensoren 105 der Küchenmaschine 100 eingestellt und/oder angepasst werden.

Beispielsweise kann (auf Basis des Betriebszustands der Temperierungseinheit 106 und/oder in Abhängigkeit von der Temperatur des Behälters 104 bzw. des Nahrungsmittels) eine Menge an Dämpfen 221 ermittelt werden. Der durch die Abzugseinheit 200 bewirkte Luftmassenstrom kann dann in Abhängigkeit von der ermittelten Menge an Dämpfen 221 eingestellt (insbesondere geregelt) werden. So kann ein besonders energieeffizienter Betrieb ermöglicht werden. Die Menge an Dämpfen 221 kann z.B. in Abhängigkeit von der Heizleistung der Temperierungseinheit 106 und in Abhängigkeit von einem modellierten Systemverhalten ermittelt werden. Dabei kann das Systemverhalten z.B. durch eine (im Vorfeld ermittelte und hinterlegte) Systemkennlinie der Temperierungseinheit 106 und der Masse des Nahrungsmittels in dem Behälter 104 beschrieben werden. Die Masse des Nahrungsmittels kann dabei anhand der Sensordaten eines Gewichtssensors 105 der Küchenmaschine 100 ermittelt werden.

Alternativ oder ergänzend kann es dem Nutzer ermöglicht werden, die Abzugseinheit 200 manuell zu aktivieren, zu deaktivieren und/oder auf eine bestimmte Leistungsstufe einzustellen.

Die Regelung des Gebläses bzw. des Lüfters 203 und des dadurch erzeugten Unterdrucks kann abhängig von der Ist-Temperatur im Behälter 104 erfolgen. Die Temperatur im Behälter 104 kann z.B. durch einen PT- oder IR- Sensor 105 erfasst werden.

Die Bereitstellung einer Abzugseinheit 200 direkt an einer Küchenmaschine 100 ermöglicht eine größere Positionierungsfreiheit für die Küchenmaschine 100 (da die Küchenmaschine 100 nicht unter die Dunstabzugshaube 400 der Küche gestellt werden muss). Ferner können die Geruchsentwicklung, die Fettbelastung und die Dampfentwicklung in der Umgebung der Küchenmaschine 100 reduziert werden. Durch eine aktive Regelung des Dunstabzugs 200 (z.B. in Abhängigkeit von der Heizleistung der Temperierungseinheit 106) kann der Energieverbrauch weiter reduziert werden. Außerdem kann die Sicht auf das Gargut in dem Behälter 104 verbessert werden (da Dämpfe 221 zuverlässig abgesaugt werden). Des Weiteren können neue Rezepte an der Küchenmaschine 100 ermöglicht werden, die einen direkten Dunstabzug an dem Behälter 104 der Küchenmaschine 100 benötigen (z.B. das Rösten von Kaffeebohnen).

Um die entstehenden Dämpfe 221 in einer Küchenmaschine 100 zu reduzieren und/oder zu vermeiden, kann somit ein Dunstabzug 200 in die Küchenmaschine 100 integriert werden. Ferner kann durch Analyse der abgesaugten Dämpfe 221 (z.B. auf Basis der Sensordaten der ein oder mehreren Sensoren 205, z.B. einer Lambda Sonde) auf den aktuellen Zustand des Kochguts in dem Behälter 104 der Küchenmaschine 100 geschlossen werden. So kann die Güte des Kochguts erhöht werden.

Die Absaugeinheit 200 kann eine Abluftführung (z.B. eine Verrohrung und/oder einen Schlauch) aufweisen. Des Weiteren kann die Absaugeinheit 200 einen Ventilator 203 (z.B. einen Motor mit Lüfter) aufweisen. Ferner kann die Absaugeinheit 200 eine Analyseeinheit 205 (etwa einen Sensor, z.B. eine Lambda Sonde) aufweisen. Die Abluftführung kann direkt über dem Behälter 104 angebracht sein. Andere Komponenten der Absaugeinheit 200 können im Korpus der Küchenmaschine 100 integriert sein.

Die Abluftführung kann in der Abdeckung 211 des Behälters 104 oder direkt in dem Behälter 104 integriert sein. Die Absaugeinheit 200 kann als eine Aufsteckeinheit an der Küchenmaschine 100 (d.h. als Zubehör) ausgebildet sein. Es kann eine aus dem Korpus der Küchenmaschine 100 ausziehbare oder ausklappbare Abluftführung bereitgestellt werden. Alternativ oder ergänzend kann eine indirekte Abluftführung (z.B. Lüftungsschlitze im Korpus der Küchenmaschine 100) bereitgestellt werden.

Ferner kann eine Kombination mit einer bestehenden Küchenlüftung 400 (z.B. mit einer Verbindung über einen Schlauch 410) ermöglicht werden. So kann auf einen Verbau eines Filtermoduls 202 und/oder eines Ventilator 203 in der Abzugseinheit 200 und/oder in der Küchenmaschine 100 verzichtet werden.

Auf Basis der Messdaten der Analyseeinheit (d.h. des Sensors) 205 kann,
- Information an einen Nutzer der Küchenmaschine 100 ausgegeben werden;
- eine automatische Anpassung eines Betriebsparameters der Küchenmaschine 100 erfolgen (z.B. Anpassung der Heizleistung der Temperierungseinheit 106, Anpassung der Rührgeschwindigkeit eines Werkzeugs 107, etc.);
- der Kochvorgang beendet werden; und/oder
- eine Anpassung der Absaugleistung bewirkt werden.

Durch die Analyse der Dämpfe 221 kann eine Optimierung des Kochergebnisses durch eine dynamische Anpassung von ein oder mehreren Betriebsparametern bewirkt werden. Ferner kann die Sicherheit der Küchenmaschine 100 erhöht werden, z.B. durch Ausgabe eines Warnhinweises, wenn ein vordefinierter Grenzwert eines Bestandteils (z.B. CO₂) der Dämpfe 221 erreicht oder überschritten wird. So kann ggf. ein unbeaufsichtigter Betrieb der Küchenmaschine 100 ermöglicht werden.

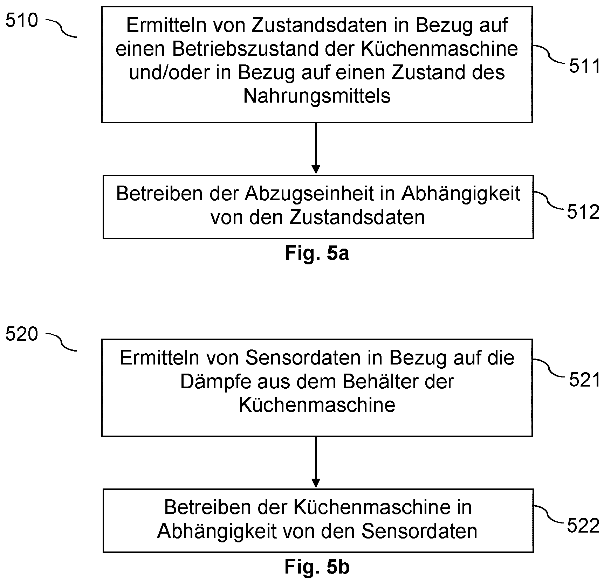

Fig. 5a zeigt ein Ablaufdiagramm eines (ggf. Computer-implementierten) Verfahrens 510 zum Betreiben einer Abzugseinheit 200. Die Abzugseinheit 200 ist dabei zum Ansaugen von Dämpfen 221 aus einem Behälter 104 einer Küchenmaschine 100 ausgebildet, wobei in dem Behälter 104 ein Nahrungsmittel gegart werden kann. Das Verfahren 510 kann von einer Steuereinheit 101 der Abzugseinheit 200 und/oder der Küchenmaschine 100 ausgeführt werden. Die Abzugseinheit 200 kann wie in diesem Dokument beschrieben ausgebildet sein.

Das Verfahren 510 umfasst das Ermitteln 511 von Zustandsdaten in Bezug auf einen Betriebszustand der Küchenmaschine 100 und/oder in Bezug auf einen Zustand eines Nahrungsmittels in dem Behälter 104. Beispielhafte Betriebszustände sind z.B. eine Gar- und/oder Heizstufe der Temperierungseinheit 106 der Küchenmaschine 100. Ein beispielhafter Zustand des Nahrungsmittels ist z.B. die Temperatur des Nahrungsmittels (die von einem Temperatursensor 105 der Küchenmaschine 100 erfasst werde kann). Das Verfahren 510 umfasst ferner das Betreiben 512 der Abzugseinheit 200, insbesondere des Gebläses 203 der Abzugseinheit 200, in Abhängigkeit von den Zustandsdaten. Beispielsweise kann das Gebläse 203 betrieben werden, um den Volumenstrom des Ansaugluftstroms zu erhöhen, wenn die Zustandsdaten anzeigen, dass eine relativ hohe Dampfmenge in dem Behälter 104 erzeugt wird (z.B. aufgrund einer relativ hohen Gartemperatur). Andererseits kann das Gebläse 203 betrieben werden, um den Volumenstrom des Ansaugluftstroms zu reduzieren, wenn die Zustandsdaten anzeigen, dass eine relativ niedrige Dampfmenge in dem Behälter 104 erzeugt wird (z.B. aufgrund einer relativ niedrigen Gartemperatur). So kann ein besonders energieeffizienter Betrieb der Abzugseinheit 200 ermöglicht werden.

Fig. 5b zeigt ein Ablaufdiagramm eines (ggf. Computer-implementierten) Verfahrens 520 zum Betreiben einer Küchenmaschine 100 in Zusammenhang mit einer Abzugseinheit 200, die zum Ansaugen von Dämpfen 221 aus einem Behälter 104 der Küchenmaschine 100 ausgebildet ist. Die Abzugseinheit 200 und/oder die Küchenmaschine 100 können wie in diesem Dokument beschrieben ausgebildet sein.

Das Verfahren 520 umfasst das Ermitteln 521 von Sensordaten in Bezug auf die aus dem Behälter 104 von der Abzugseinheit 200 angesaugten Dämpfe 221, insbesondere in Bezug auf die chemische Zusammensetzung und/oder in Bezug auf die Menge der Dämpfe 221 aus dem Behälter 104. Die Sensordaten können von einem Sensor 205 der Abzugseinheit 205 erfasst werden.

Des Weiteren umfasst das Verfahren 520 das Betreiben 522 der Küchenmaschine 100 in Abhängigkeit von den Sensordaten. Dabei kann z.B. ein Betriebsprogramm und/oder eine Gar- bzw. Heizstufe der Küchenmaschine 100 in Abhängigkeit von den Sensordaten eingestellt und/oder angepasst werden. Alternativ oder ergänzend kann ein Hinweis über die Benutzerschnittstelle 108 der Küchenmaschine 100 ausgegeben werden. Alternativ oder ergänzend kann der Garprozess automatisch beendet werden. So kann die Güte eines in der Küchenmaschine 100 zubereiteten, insbesondere gegarten, Nahrungsmittels erhöht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Abzugseinheit, der vorgeschlagenen Steuereinheit, der vorgeschlagenen Küchenmaschine, des vorgeschlagenen Systems und/oder der vorgeschlagenen Verfahren veranschaulichen sollen.

## Patentansprüche

1. Abzugseinheit (200) für eine Küchenmaschine (100), die einen Behälter (104) zur Verarbeitung, insbesondere zum Garen, eines Nahrungsmittels umfasst; wobei
- die Abzugseinheit (200) ausgebildet ist, an der Küchenmaschine (100) angeordnet zu werden; und
- die Abzugseinheit (200) eine Einlassöffnung (201) umfasst und ausgebildet ist, einen Ansaugluftstrom zu bewirken, durch den Dämpfe (221) aus dem Behälter (104) durch die Einlassöffnung (201) in die Abzugseinheit (200) gefördert werden.

2. Abzugseinheit (200) gemäß Anspruch 1, wobei
- die Abzugseinheit (200) ausgebildet ist, über eine mechanische Schnittstelle (303) mit der Küchenmaschine (100) verbunden und/oder von der Küchenmaschine (100) getrennt zu werden; und/oder
- die Abzugseinheit (200) als abnehmbarer Aufsatz der Küchenmaschine (100) ausgebildet ist.

3. Abzugseinheit (200) gemäß einem der vorhergehenden Ansprüche, wobei
- die Abzugseinheit (200) einen Deckel (211) umfasst, der ausgebildet ist, den Behälter (104) der Küchenmaschine (100) zu bedecken; und
- die Einlassöffnung (201) an dem Deckel (211) angeordnet ist, insbesondere derart, dass die Einlassöffnung (201) über dem Behälter (104) angeordnet ist, wenn der Deckel (211) den Behälter (104) bedeckt.

4. Abzugseinheit (200) gemäß Anspruch 3, wobei
- der Deckel (211) ausgebildet ist, um ein Gelenk (212) geschwenkt zu werden, um den Behälter (104) zu öffnen oder um den Behälter (104) mit dem Deckel (211) zu bedecken; oder
- der Deckel (211) ausgebildet ist, in eine Rückwand (223) der Küchenmaschine (100) versenkt zu werden, um den Behälter (104) zu öffnen, und aus der Rückwand (223) der Küchenmaschine (100) herausbewegt zu werden, um den Behälter (104) mit dem Deckel (211) zu bedecken.

5. Abzugseinheit (200) gemäß einem der vorhergehenden Ansprüche, wobei die Abzugseinheit (200) als separate Einheit zu der Küchenmaschine (100) mit einer separaten Energieversorgung und/oder mit einer separaten Benutzerschnittstelle (302) ausgebildet ist.

6. Abzugseinheit (200) gemäß einem der vorhergehenden Ansprüche, wobei
- die Abzugseinheit (200) eine Daten-Schnittstelle (312) umfasst, die ausgebildet ist, eine Datenkommunikation mit der Küchenmaschine (100) zu ermöglichen; und/oder
- die Abzugseinheit (200) eine Energie-Schnittstelle (311) umfasst, die ausgebildet ist, die Abzugseinheit (200) mit elektrischer Energie aus der Küchenmaschine (100) zu versorgen.

7. Abzugseinheit (200) gemäß einem der vorhergehenden Ansprüche, wobei
- die Abzugseinheit (200) zumindest einen Sensor (205) umfasst, der eingerichtet ist, Sensordaten in Bezug auf die Dämpfe (221) aus dem Behälter (104), insbesondere in Bezug auf eine chemische Zusammensetzung und/oder in Bezug auf eine Menge der Dämpfe (221) aus dem Behälter (104), zu erfassen; und
- die Abzugseinheit (200) eingerichtet ist, der Küchenmaschine (100) die Sensordaten, insbesondere über eine Daten-Schnittstelle (312), bereitzustellen.

8. Abzugseinheit (200) gemäß einem der vorhergehenden Ansprüche, wobei die Abzugseinheit (200) ein Gebläse (203) umfasst, das ausgebildet ist, den Ansaugluftstrom zu erzeugen.

9. Abzugseinheit (200) gemäß einem der vorhergehenden Ansprüche, wobei die Abzugseinheit (200) ein Koppelelement (415) umfasst, das ausgebildet ist, die Abzugseinheit (200) über eine Fluidleitung (410) mit einem externen Gebläse (403), insbesondere mit einem Gebläse (403) eines externen Dunstabzugs (400), zu koppeln, um zu ermöglichen, dass der Ansaugluftstrom durch das externe Gebläse (403) erzeugt wird.

10. Abzugseinheit (200) gemäß einem der vorhergehenden Ansprüche, wobei
- die Abzugseinheit (200) ausgebildet ist, durch eine Steuereinheit (101) der Küchenmaschine (100) gesteuert zu werden; und/oder
- die Abzugseinheit (200) ausgebildet ist, von einem Nutzer über eine Benutzerschnittstelle (108) der Küchenmaschine (100) bedient zu werden.

11. System, das umfasst,
- eine Abzugseinheit (200) gemäß einem der vorhergehenden Ansprüche, die eingerichtet ist, einen Ansaugluftstrom zu bewirken, durch den Dämpfe (221) aus einem Behälter (104) einer Küchenmaschine (100) in die Abzugseinheit (200) gefördert werden;
- einen, von der Abzugseinheit (200) örtlich getrennten und insbesondere fest installierbaren, Dunstabzug (400) mit einem Gebläse (403); und
- eine Fluidleitung (410), die ausgebildet ist, über ein erstes Koppelelement (405) mit dem Dunstabzug (400) und über ein zweites Koppelelement (415) mit der Abzugseinheit (200), insbesondere lösbar, verbunden zu werden, sodass der Ansaugluftstrom durch das Gebläse (403) des Dunstabzugs (400) bewirkt werden kann.

12. Steuereinheit (101) für eine Küchenmaschine (100) und/oder für eine Ansaugeinheit (200), wobei die Küchenmaschine (100) ausgebildet ist, mit der Abzugseinheit (200) zum Ansaugen von Dämpfen (221) aus einem Behälter (104) der Küchenmaschine (100) betrieben zu werden; wobei die Steuereinheit (101) eingerichtet ist,
- Zustandsdaten in Bezug auf einen Betriebszustand der Küchenmaschine (100) und/oder in Bezug auf einen Zustand eines Nahrungsmittels in dem Behälter (104) zu ermitteln; und
- die Abzugseinheit (200), insbesondere ein Gebläse (203) der Abzugseinheit (200), in Abhängigkeit von den Zustandsdaten zu betreiben.

13. Steuereinheit (101) für eine Küchenmaschine (100) und/oder für eine Ansaugeinheit (200), wobei die Küchenmaschine (100) ausgebildet ist, mit der Abzugseinheit (200) zum Ansaugen von Dämpfen (221) aus einem Behälter (104) der Küchenmaschine (100) betrieben zu werden; wobei die Steuereinheit (101) eingerichtet ist,
- Sensordaten in Bezug auf die aus dem Behälter (104) von der Abzugseinheit (200) angesaugten Dämpfe (221), insbesondere in Bezug auf eine chemische Zusammensetzung und/oder in Bezug auf eine Menge der Dämpfe (221) aus dem Behälter (104), zu ermitteln; und
- die Küchenmaschine (100) in Abhängigkeit von den Sensordaten zu betreiben.

14. Verfahren (510) zum Betreiben einer Abzugseinheit (200), die zum Ansaugen von Dämpfen (221) aus einem Behälter (104) einer Küchenmaschine (100) ausgebildet ist; wobei das Verfahren (510) umfasst,
- Ermitteln (511) von Zustandsdaten in Bezug auf einen Betriebszustand der Küchenmaschine (100) und/oder in Bezug auf einen Zustand eines Nahrungsmittels in dem Behälter (104); und
- Betreiben (512) der Abzugseinheit (200), insbesondere eines Gebläses (203) der Abzugseinheit (200), in Abhängigkeit von den Zustandsdaten.

15. Verfahren (520) zum Betreiben einer Küchenmaschine (100) in Zusammenhang mit einer Abzugseinheit (200), die zum Ansaugen von Dämpfen (221) aus einem Behälter (104) der Küchenmaschine (100) ausgebildet ist; wobei das Verfahren (520) umfasst,
- Ermitteln (521) von Sensordaten in Bezug auf die aus dem Behälter (104) von der Abzugseinheit (200) angesaugten Dämpfe (221), insbesondere in Bezug auf eine chemische Zusammensetzung und/oder in Bezug auf eine Menge der Dämpfe (221) aus dem Behälter (104); und
- Betreiben (522) der Küchenmaschine (100) in Abhängigkeit von den Sensordaten.
